# EUROPÄISCHE PATENTSCHRIFT

(11) **EP 1 594 082 B1**
(45) Veröffentlichungstag und Bekanntmachung des Hinweises auf die Patenterteilung: **03.01.2007**
(21) Anmeldenummer: 04103449.7
(22) Anmeldetag: 20.07.2004
(51) Int. Cl.: G06K 19/077

(54) **Anordung und Verfahren zum Anbringen eines Transponderelements an einem Gegenstand**
Device and method to attach a transponderelement on an object
Appareil et méthode pour attacher un élément transpondeur à un objet

(30) Priorität: 05.05.2004 EP 04101920
(43) Veröffentlichungstag der Anmeldung: 09.11.2005
(73) Patentinhaber: Schreiner Group GmbH & Co. KG, 85764 Oberschleissheim (DE)
(72) Erfinder: Paugstadt, Ralf Dr., 80937, München (DE); Birk, Uwe Dr., 80995, München (DE)
(74) Vertreter: Kehl, Günther

(56) Entgegenhaltungen:
- WO-A-00/21031
- WO-A-03/067512
- DE-A1- 10 136 502

## Beschreibung

Die Erfindung betrifft eine Anordnung und ein Verfahren zum Anbringen eines Transponderelements an einem Gegenstand.

Transponderelemente werden häufig auf Werkstücken angebracht, um einen automatischen Herstellungsprozess zu steuern, beispielsweise auf einer Fertigungsstraße, wobei zwischen den Bearbeitungswerkzeugen und dem Werkstück ein Datenaustausch über eine Sende- und/oder Empfangseinrichtung des Transponderelements stattfindet. Die Daten zwischen der Fertigungsstraße und dem Transponderelement werden häufig durch Hochfrequenzsignale übertragen. Wenn das Werkstück aus einem leitenden Material, insbesondere Metall, besteht, wird der Datenaustausch mit der Sende- und/oder Empfangseinrichtung erschwert, wenn dieselbe nahe an der Metalloberfläche des Werkstückes liegt.

Es ist daher bereits bekannt geworden, Datenaustauschetiketten mit einem Transponderelement auf einem dielektrischen Sockel anzuordnen, so daß die Sende- und/oder Empfangseinrichtung des Datenaustauschetiketts sich in einem ausreichenden Abstand zu der Metalloberfläche des Werkstückes befindet.

Diese bekannte Lösung hat sich jedoch nicht als zufriedenstellend erwiesen, da die Verwendung der dielektrischen Sockel die Vorratshaltung der Datenaustauschetiketten, die überlicherweise auf einer Vorratsrolle bereit gehalten werden müssen, erheblich erschwert.

Aus der DE 100 17 142 A1 ist es bekannt, bei einem Datenaustauschetikett die Sende-und/ oder Empfangseinrichtung auf einem aufstellbaren Abschnitt des Etiketts anzuordnen. Durch das Aufstellen des aufstellbaren Abschnitts wird die Sende- und/oder Empfangseinrichtung in eine ausreichende Entfernung zu der Metalloberfläche des Werkstückes gebracht, so daß der Datenaustausch über Hochfrequenzsignale durch die Metalloberfläche des Werkstückes weitgehend unbeeinträchtigt bleibt. In bestimmten Anwendungsbereichen besteht jedoch die Gefahr, daß der aufgestellte Abschnitt des Etiketts beschädigt wird. Der Vorgang des Aufstellens des Abschnitts ist darüber hinaus nur sehr schwer automatisierbar.

Aus der DE 101 36 502 A1 ist eine Identifikationsanordnung zur Fixierung im Bereich einer zumindest abschnittsweise elektromagnetisch aktivierbaren Oberfläche bekannt. Die bekannte Identifikationsanordnung weist ein elastisches Stützmittel auf, das derart gestaltet ist, daß ein mit einem Identifikationsmittel versehener Trägerabschnitt in unbelasteter Funktionsposition in Abstand zu der Oberfläche bleibt und bei Belastung ausweicht. Die dreidimensionale Form der Identifikationsanordnung wird durch einen komplizierten Vorgang von Falzen, Knicken, Biegen und Kleben erzeugt, der - wenn überhaupt - nur unter großem Aufwand einer Automatisierung zugänglich ist.

Aus WO 02/25584 A1 ist eine Anordnung gemäß dem Oberbegriff des Patentanspruches 1 bekannt. Die bekannte Anordnung umfaßt eine Trägerschicht, deren Dicke durch Schäumen vergrößerbar ist.

Ausgehend von diesem Stand der Technik liegt der Erfindung die Aufgabe zugrunde, eine Anordnung zum Anbringen eines Transponderelements zu schaffen, die in großen Stückzahlen auf einer Vorratsrolle bereit gehalten werden kann und eine einfache automatisierte Verarbeitung zuläßt. Die Anordnung soll insbesondere beim Anbringen des Transponderelements auf metallischem Untergrund eine einwandfreie Funktion des Transponderelements durch Erzeugen eines möglichst großen Abstandes zum Untergrund ermöglichen.

Diese Aufgabe wird gelöst durch eine Anordnung gemäß Patentanspruch 1 gelöst.

Dank der erfindungsgemäßen Konstruktion kann eine Folienanordnung bereitgestellt werden, die eine Dicke aufweist, die die Dicke von sonstigen Folienetiketten nicht wesentlich übersteigt. Lagerhaltung und Verspendung sind unproblematisch, ähnlich wie bei sonst üblichen Etiketten. Durch die Funktion der aktivierbaren Schicht oder der aktivierbaren Schichten wird der Abstand zwischen dem Transponderelement und dem Gegenstand erweitert, wodurch der für den Betrieb des Transponders erforderliche Abstand zu einem metallischen Untergrund geschaffen wird.

Vorzugsweise wird die Trägerschicht und/oder die Aktivschicht durch chemische und/oder physikalische Beeinflussung aktiviert. Eine Aktivierung dieser Art läßt sich leicht in einen automatischen Verarbeitungsprozeß integrieren. Eine manuelle mechanische Abstandsvergrößerung ist nicht erforderlich.

Die Aktivierung führt vorzugsweise zu einer dauerhaften Vergrößerung des Abstandes.

Vorteilhaft ist ferner, wenn als Aktivschicht eine schrumpfbare Schicht verwendet wird. Als schrumpfbare Schichten oder Folien eignen sich an sich bekannte kalt gereckte thermoplastische Kunststofffolien, die sich bei Wärmebehandlung zusammenziehen. Als schrumpfbare Schicht ist generell jedes Material geeignet, das bei Einwirkung von Hitze oder Kälte eine Kontraktion erfährt. Die Kontraktion der Aktivschicht führt zu einer Aufwölbung der mit der Aktivschicht gekoppelten das Transponderelement tragenden Trägerschicht, wodurch sich die gewünschte Abstandsvergrößerung einstellt. Bei der erfindungsgemäßen Anordnung kann somit die Schrumpfungsbewegung in eine Bewegung umgesetzt werden, die zu der Vergrößerung des genannten Abstands führt.

Alternativ oder ergänzend zur Verwendung von schrumpfbaren Schichten als Aktivschicht können auch expandierbare und/oder intumeszierbare und/oder elastische Schichten als Trägerschichten mit dem gleichen Erfolg eingesetzt werden. Unter Intumeszenz versteht man die Fähigkeit von Stoffen, etwa durch Zufuhr von Wärme oder Strahlung oder durch chemische Interaktion, aufzuschäumen. Durch Auslösung des Intumeszenzvorgangs wird der Abstand zwischen der Trägerschicht und dem Gegenstand, auf dem die Folienanordnung angebracht ist, in solchem Maße vergrößert, daß der erforderliche Abstand zwischen dem von der Trägerschicht getragenen Transponderelement und dem Untergrund, auf dem die Folienanordnung anzubringen ist, geschaffen wird.

Die Trägerschicht ist mit der Aktivschicht über isolierte Klebstoffpunkte, Schweißpunkte oder Crimpungen verbunden. Dadurch kann die Kontraktion der Aktivschicht und/oder die Expansion der Trägerschicht besonders effektiv in die gewünschte Abstandsvergrößerung umgesetzt werden.

Nach einer alternativen Ausführungsform der Erfindung sorgen eine elastische und/oder intumeszierende Aktivschicht für die angestrebte Abstandsvergrößerung.

Im Falle einer elastischen Trägerschicht und/oder einer elastischen Aktivschicht ist nach einer besonders vorteilhaften Weiterbildung der Erfindung vorgesehen, daß die Trägerschicht und/oder die Aktivschicht härtbar ist beziehungsweise sind, um den Zustand nach der Ausdehnung der genannten Schichten gewissermaßen zu konservieren. Dabei können bevorzugt Härtungsmittel den genannten Schichten beigegeben werden, die durch Bestrahlung, insbesondere UV-Bestrahlung, aktiviert werden.

Die Aktivschicht ist vorzugsweise in separate Stücke unterteilt.

Gemäß einer weiteren Ausgestaltung der Erfindung ist eine Basisschicht vorgesehen. Die Basisschicht kann selbstklebend ausgeführt sein, um die Anordnung an einem Gegenstand zu befestigen. An der Basisschicht kann die Aktivschicht befestigt sein.

Ausgehend vom eingangs erläuterten Stand der Technik liegt der Erfindung auch die Aufgabe zugrunde, ein Verfahren zum Anbringen eines Transponderelements zu schaffen, das sich durch eine einfache automatisierte Verarbeitung auszeichnet.

Diese Aufgabe ist gelöst durch ein Verfahren zum Anbringen eines Transponderelements an einem Gegenstand, das folgende Schritte umfaßt: Bereitstellen von jeweils ein Transponderelement aufweisenden Anordnungen mit jeweils einer das Transponderelement tragenden Trägerschicht, die an mindestens eine die durch Aktivierung in ihren Abmessungen veränderbar ist und/oder an mindestens eine durch Aktivierung in ihren Abmessungen veränderbare Aktivschicht derart über isolierte Verbindungspunkte gekoppelt ist, wobei zur Vergrößerung des Abstands zwischen dem Transponderelement und dem Gegenstand die Trägerschicht expandierbar ist und/oder die Aktivschicht schrumpfbar ist, daß durch die Aktivierung sich der Abstand zwischen dem Transponderelement und dem Gegenstand vergrößert, fortlaufend auf einer Bahn;
Verspenden der Anordnungen auf den Gegenstand;
Vergrößern des Abstands zwischen dem Transponderelement und dem Gegenstand.

Nach einer vorteilhaften Weiterbildung des Verfahrens erfolgt das Vergrößern des Abstands zwischen dem Transponderelement und dem Gegenstand durch chemische und/oder physikalische Aktivierung.

Nach einer vorteilhaften Ausgestaltung des Verfahrens werden durch die chemische und/ oder physikalische Aktivierung eine Änderung der Abmessungen der Trägerschicht und/ oder der Aktivschicht hervorgerufen.

Dabei ist besonders vorteilhaft, wenn die Abmessungsänderung eine Schrumpfung der Aktivschicht umfaßt.

Alternativ oder ergänzend hierzu kann die Abmessungsänderung eine Expansion des Trägerschicht umfassen.

Nach einer vorteilhaften Ausgestaltung umfaßt die Abmessungsänderung eine Vergrößerung der Dicke der Trägerschicht und oder der Aktivschicht durch Intumeszenz oder Elastizität.

Im Falle einer elastischen Abmessungsvergrößerung ist nach einer besonders vorteilhaften Weiterbildung des erfindungsgemäßen Verfahrens vorgesehen, daß die elastisch vergrößerten Schichten gehärtet werden, um den Zustand nach der Ausdehnung der genannten Schichten gewissermaßen zu konservieren. Dabei können bevorzugt Härtungsmittel den genannten Schichten beigegeben werden, die durch Bestrahlung, insbesondere UV-Bestrahlung, aktiviert werden.

Weitere vorteilhafte Ausfiihrungsformen sind den Unteransprüchen zu entnehmen.

Die Erfindung wird im folgenden anhand von in den Zeichnungen schematisch dargestellten. Ausfiihrungsbeispielen näher erläutert. Die Zeichnungen sind nicht maßstabsgetreu. Insbesondere die Schichtdicken sind im Verhältnis zu den sonstigen Abmessungen der Folienanordnungen aus Gründen der Anschaulichkeit stark vergrößert.
- Figur 1: zeigt die Folienanordnung gemäß der Erfindung im Schnitt längs der Schnittlinie I -I in Figur 2;
- Figur 2: zeigt die Folienanordnung aus Figur 1 im Schnitt längs der Schnittlinie II - II aus Figur I;
- Figur 3: zeigt die Folienanordnung wie in Figur 1, jedoch nach Aktivierung;
- Figur 4: zeigt eine Prinzipskizze einer Anlage zur Durchführung des Verfahrens gemäß der Erfindung.

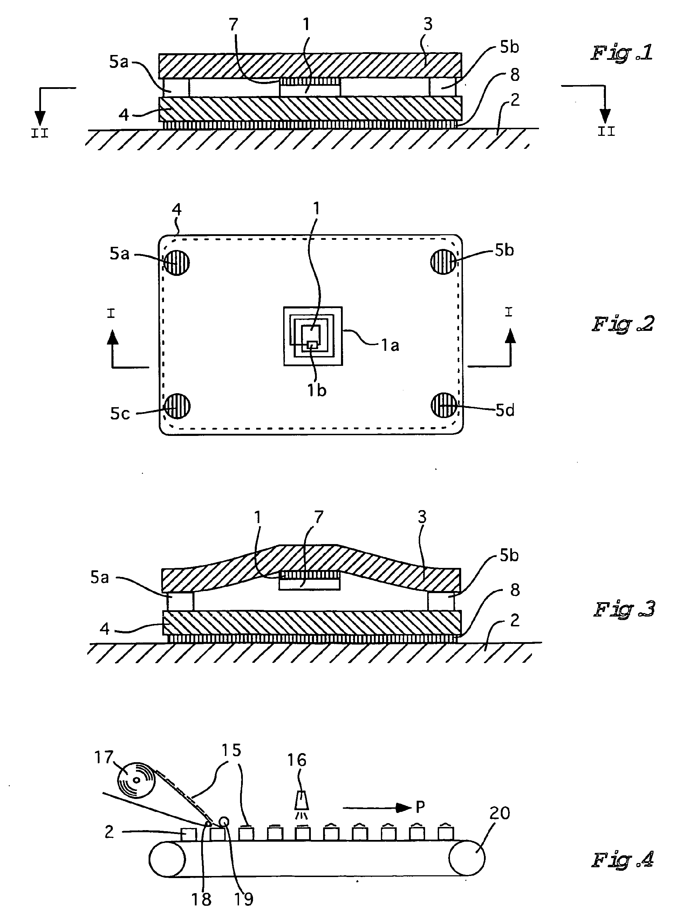

Die in Figur 1 gezeigte Folienanordnung weist eine Aktivschicht 4 auf, die an einer Seite (an der in Figur 1 unten liegenden Seite) mit Haftklebstoff 8 beschichtet ist. Um einen Klebstoffüberhang an den Rändern zu vermeiden, sind die Randbereiche klebstofffrei ausgeführt.

An der Aktivschicht 4 ist mittels vier Klebstoffpunkten, von denen in Figur 1 zwei Klebstoffpunkte, nämlich die Klebstoffpunkte 5a und 5b zu erkennen sind, eine Trägerschicht 3 befestigt. Die Trägerschicht 3 ist in ihrem zentralen Bereich mit einem Klebstoff 7 beschichtet, der dazu dient, ein Transponderelement 1 zu befestigen, das zwischen der Aktivschicht 4 und der Trägerschicht 3 eingeschlossen ist. Das Transponderelement 1 liegt lose auf der Aktivschicht 4 auf.

Die Aktivschicht 4 ist eine sogenannte Schrumpffolie, die sich bei Erwärmung, Bestrahlung oder - je nach dem verwendeten Material- bei einer sonstigen Behandlung dauerhaft zusammenzieht (schrumpft).

Statt der Schichten 3 und 4 können selbstverständlich auch Stücke aus Verbundfolien zum gleichen Zweck verwendet werden.

Die Anordnung ist mittels der Klebstoffschicht 8 an einem Gegenstand 2 befestigt.

In Figur 2 ist die Folienanordnung im Schnitt längs der Schnittlinie II - II gezeigt. Es ist die Aktivschicht 4 aus Schrumpffolie mit den auf dieser angeordneten vier Klebstoffpunkte 5a bis 5d zu erkennen. Ferner ist das Transponderelement 1 zu sehen, das eine Antenne 1a und einen elektronischen Baustein 1b enthält.

Die anhand der in den Figuren dargestellte Anordnung baut sehr flach, da sie - von den Klebstoffschichten abgesehen - im wesentlichen nur aus den beiden Folienstücken 3 und 4 und dem Transponderelement 1 besteht. Anordnungen dieser Art können daher bequem beispielsweise auf einem zu einer Vorratsrolle aufgewickelten Trägerband (nicht dargestellt), auf dem sie vorübergehend mittels der Schicht aus Haftklebstoff 8 haften, bereitgehalten werden. Dank der flachen Bauweise ist auch die automatische Verspendung möglich. Hierzu wird das Trägerband über eine Umlenkkante gezogen, so daß die über die Umlenkkante laufende Anordnung sich von dem Trägerband abhebt und durch Anpreßwalzen beispielsweise an einem metallischen Werkstück mittels der Schicht aus Haftklebstoff 8 befestigt wird.

Nach Auslösung des Schrumpfvorgangs in der Aktivschicht 4 ergibt sich der in Figur 3 schematisch gezeigte Zustand. Infolge der Verkleinerung der Aktivschicht 4 durch den oben erwähnten Schrumpfvorgang wölbt sich die Trägerschicht 3 und hebt sich zusammen mit dem Transponderelement 1 von der Aktivschicht 4 ab. Durch die Auswölbung der Trägerschicht 3 wird der für den ordnungsgemäßen Betrieb des Transponderelements 1 erforderliche Abstand zwischen dem Transponderelement 1 und dem Untergrund 2, auf dem die Folienanordnung angebracht ist, geschaffen.

Das Transponderelement 1 ist durch die Trägerschicht 3 vor Schmutz und Beschädigung geschützt. Eine Befestigung des Transponderelements 1 an der äußeren Seite der Trägerschicht 3 ist jedoch ebenfalls denkbar, insbesondere in einem Anwendungsfall, bei dem der Schutz vor Verschmutzung keine wichtige Rolle spielt.

Nach einer Ausführungsvariante wird als Trägerschicht 3 eine Dehnfolie eingesetzt, die sich bei entsprechender Behandlung dauerhaft vergrößert und ebenfalls zu der in Figur 3 gezeigten Auswölbung führt. Da sich bei dieser Ausführungsvariante hinsichtlich der bildlichen Darstellung keine Unterschiede zu den Figuren 1 bis 3 ergeben, kann von einer weiteren bildlichen Darstellung abgesehen werden.

Figur 4 zeigt eine Prinzipskizze einer Anlage zur Durchführung des Verfahrens gemäß der Erfindung. In Figur 4 ist eine Förderanlage 20 zu sehen, auf der metallische Gegenstände 2 in Richtung des Pfeils P transportiert werden. Auf den Gegenständen 2 sollen Transponderelemente mittels der erfindungsgemäßen Anordnung angebracht werden. Zu diesem Zweck werden selbstklebende Anordnungen 1 S, die mit einem Transponderelement versehen sind, auf einer zu einer Vorratsrolle 17 aufgewickelten klebstoffabweisenden Trägerbahn bereitgestellt. Die Trägerbahn wird über eine Umlenkkante 18 gezogen, wodurch sich die selbstklebenden Anordnungen 15 von der Trägerbahn abheben und mittels einer Anpreßwalze 19 auf dem jeweiligen Gegenstand 2 befestigt werden. Die so mit Anordnungen 15 versehenen Gegenstände 2 durchlaufen eine Bestrahlungseinrichtung 16. Durch die Wirkung der Bestrahlung wird der Abstand zwischen dem an der jeweiligen Anordnung 15 befestigten Transponderelement und dem jeweiligen Gegenstand 2 vergrößert.

## Patentansprüche

1. Anordnung zum Anbringen mindestens eines Transponderelements (1) an einem Gegenstand (2), welche Anordnung mindestens eine das Transponderelement (1) tragende Trägerschicht (3) aufweist, die an mindestens eine Aktivschicht (4; 4a, 4b) gekoppelt ist, **dadurch gekennzeichnet, dass** die Koppelung über isolierte Verbindungen (5a - 5d) realisiert ist, und dass zur Vergrößerung des Abstands zwischen dem Transponderelement (1) und dem Gegenstand (2) die Trägerschicht expandierbar ist und/oder die Aktivschicht (4) schrumpfbar ist.

2. Anordnung nach Anspruch 1, bei der die Trägerschicht (3) und/oder die Aktivschicht (4; 4a, 4b) durch chemische und/oder physikalische Beeinflussung aktivierbar sind.

3. Anordnung nach Anspruch 1 oder 2, bei der die Vergrößerung des Abstands dauerhaft ist.

4. Anordnung nach einem der vorhergehenden Ansprüche, bei der die Trägerschicht (3) intumeszierbar ist.

5. Anordnung nach einem der vorhergehenden Ansprüche, bei der die Trägerschicht (3) elastisch ist.

6. Anordnung nach Anspruch 5, bei der die Trägerschicht (3) härtbar ist.

7. Anordnung nach Anspruch 5, bei der die Trägerschicht (3) durch Strahlung härtbar ist.

8. Anordnung nach einem der vorhergehenden Ansprüche, bei der die Verbindungen (5a - 5d) Klebstoffpunkte, Schweißpunkte oder Crimpungen sind.

9. Anordnung nach einem der vorhergehenden Ansprüche, bei der die Aktivschicht (4; 4a, 4b) elastisch ist.

10. Anordnung nach Anspruch 9, bei der die Aktivschicht (4; 4a, 4b) härtbar ist.

11. Anordnung nach Anspruch 9, bei der die Aktivschicht (4; 4a, 4b) durch Strahlung härtbar ist.

12. Anordnung nach einem der vorhergehenden Ansprüche, bei der die Aktivschicht (4; 4a, 4b) intumeszierbar ist.

13. Anordnung nach einem der vorhergehenden Ansprüche, bei der die Aktivschicht (4) in Stücke (4a, 4b, 4c, 4d) unterteilt ist.

14. Anordnung nach einem der vorhergehenden Ansprüche, die eine Basisschicht (6) aufweist.

15. Anordnung nach Anspruch 14, bei der die Basisschicht (6) zur Befestigung an dem Gegenstand (2) selbstklebend ist.

16. Anordnung nach Anspruch 14 oder 15, bei der die Aktivschicht (4; 4a, 4b) an der Basisschicht (6) befestigt ist.

17. Verfahren zum Anbringen eines Transponderelements (1) an einem Gegenstand (2), **gekennzeichnet durch** folgende Schritte:
Bereitstellen von jeweils ein Transponderelement aufweisenden Anordnungen mit jeweils einer das Transponderelement (1) tragenden Trägerschicht (3), die an mindestens eine Aktivschicht (4; 4a, 4b) über isolierte Verbindungen (5a - 5d) gekoppelt ist, wobei zur Vergrößerung des Abstands zwischen dem Transponderelement (1) und dem Gegenstand (2) die Trägerschicht expandierbar ist und/oder die Aktivschicht (4) schrumpfbar ist, fortlaufend auf einer Bahn;
Verspenden der Anordnungen auf den Gegenstand (2);
Vergrößern des Abstands zwischen dem Transponderelement (1) und dem Gegenstand (2).

18. Verfahren nach Anspruch 17, bei dem das Vergrößern des Abstands zwischen dem Transponderelement (1) und dem Gegenstand (2) durch chemische und/oder physikalische Aktivierung erfolgt.

19. Verfahren nach Anspruch 18, bei dem durch die chemische und/oder physikalische Aktivierung eine Änderung der Abmessungen der Trägerschicht und/oder der Aktivschicht (4; 4a, 4b) hervorgerufen werden.

20. Verfahren nach Anspruch 19, bei dem die Abmessungsänderung eine Schrumpfung der Aktivschicht (1) umfaßt.

21. Verfahren nach Anspruch 19 oder 20, bei dem die Abmessungsänderung eine Expansion der Trägerschicht (15) umfaßt.

22. Verfahren nach einem der Ansprüche 19 bis 21, bei dem die Abmessungsänderung eine Vergrößerung der Dicke der Trägerschicht (8) und/oder der Aktivschicht durch Intumeszenz oder Elastizität umfaßt.

23. Verfahren nach einem der Ansprüche 17 bis 22, bei dem die Trägerschicht (8) und/oder die Aktivschicht gehärtet wird.

## Claims

1. A configuration for attaching at least one transponder element (1) to an object (2), this configuration having at least one carrier layer (3), carrying the transponder element (1), which is coupled to at least one active layer (4; 4a, 4b), **characterized in that** the coupling is implemented via insulated connections (5a - 5d), and the carrier layer is expandable and/or the active layer (4) is shrinkable to enlarge the spacing between the transponder element (1) and the object (2).

2. The configuration according to Claim 1, wherein the carrier layer (3) and/or the active layer (4; 4a, 4b) are activatable by chemical and/or physical influence.

3. The configuration according to Claim 1 or 2, wherein the enlargement of the spacing is permanent.

4. The configuration according to one of the preceding claims, wherein the carrier layer (3) is capable of intumescence.

5. The configuration according to one of the preceding claims, wherein the carrier layer (3) is elastic.

6. The configuration according to Claim 5, wherein the carrier layer (3) is curable.

7. The configuration according to Claim 5, wherein the carrier layer (3) is curable by radiation.

8. The configuration according to one of the preceding claims, wherein the connections (5a - 5d) are adhesive spots, spot welds, or crimps.

9. The configuration according to one of the preceding claims, wherein the active layer (4; 4a, 4b) is elastic.

10. The configuration according to Claim 9, wherein the active layer (4; 4a, 4b) is curable.

11. The configuration according to Claim 9, wherein the active layer (4; 4a, 4b) is curable by radiation.

12. The configuration according to one of preceding claims, wherein the active layer (4; 4a, 4b) is capable of intumescence.

13. The configuration according to one of the preceding claims, where the active layer (4) is subdivided into parts (4a, 4b, 4c, 4d).

14. The configuration according to one of the preceding claims, which has a base layer (6).

15. The configuration according to Claim 14, wherein the base layer (6) is self-adhesive for attachment to an object (2).

16. The configuration according to Claim 14 or 15, wherein the active layer (4; 4a, 4b) is attached to the base layer (6).

17. A method for attaching a transponder element (1) to an object (2), **characterized by** the following steps:
providing configurations continuously on a web, each having a transponder element, which each have a carrier layer (3), carrying the transponder element (1), which is coupled to at least one active layer (4; 4a, 4b) via insulated connections (5a - 5d), the carrier layer being expandable and/or the active layer (4) being shrinkable to enlarge the spacing between the transponder element (1) and the object (2);
dispensing the configurations onto the object (2); enlarging the spacing between the transponder element (1) and the object (2).

18. The method according to Claim 17, wherein the spacing between the transponder element (1) and the object (2) is enlarged by chemical and/or physical activation.

19. The method according to Claim 18, wherein a change of the dimensions of the carrier layer and/or the active layer (4; 4a, 4b) is caused by the chemical and/or physical activation.

20. The method according to Claim 19, wherein the dimensional change comprises a shrinkage of the active layer (1).

21. The method according to Claim 19 or 20, wherein the dimensional change comprises an expansion of the carrier layer (15).

22. The method according to one of Claims 19 through 21, wherein the dimensional change comprises an enlargement of the thickness of the carrier layer (8) and/or the active layer by intumescence or elasticity.

23. The method according to one of Claims 17 through 22, wherein the carrier layer (8) and/or the active layer are cured.

## Revendications

1. Dispositif d'installation d'au moins un élément transpondeur (1) sur un objet (2), lequel dispositif comporte au moins une couche support (3) supportant l'élément transpondeur (1) et couplée à au moins une couche active (4 ; 4a, 4b), **caractérisé en ce que** le couplage est effectué à l'aide de connexions isolées (5a-5d) et que, pour accroître la distance entre l'élément transpondeur (1) et l'objet (2), la couche support est expansible et/ou la couche active (4) est rétractable.

2. Dispositif selon la revendication 1, dans laquelle la couche support (3) et/ou la couche active (4 ; 4a, 4b) sont activables par influence chimique et/ou physique.

3. Dispositif selon la revendication 1 ou 2, dans laquelle l'accroissement de la distance est permanent.

4. Dispositif selon une des revendications précédentes, dans laquelle la couche support (3) est susceptible d'intumescence.

5. Dispositif selon une des revendications précédentes, dans laquelle la couche support (3) est élastique.

6. Dispositif selon la revendication 5, dans laquelle la couche support (3) est durcissable.

7. Dispositif selon la revendication 5, dans laquelle la couche support (3) est durcissable par irradiation.

8. Dispositif selon une des revendications précédentes, dans laquelle les connexions (5a-5d) sont des points de colle, des points de soudure ou des sertissages.

9. Dispositif selon une des revendications précédentes, dans laquelle la couche active (4 ; 4a, 4b) est élastique.

10. Dispositif selon la revendication 9, dans laquelle la couche active (4 ; 4a, 4b) est durcissable.

11. Dispositif selon la revendication 9, dans laquelle la couche active (4; 4a, 4b) est durcissable par irradiation.

12. Dispositif selon une des revendications précédentes, dans laquelle la couche active (4; 4a, 4b) est susceptible d'intumescence.

13. Dispositif selon une des revendications précédentes, dans laquelle la couche active (4) est divisée en morceaux (4a, 4b, 4c, 4d).

14. Dispositif selon une des revendications précédentes, qui comporte une couche de base (6).

15. Dispositif selon la revendication 14, dans laquelle la couche de base (6) à fixer à l'objet (2) est autocollante.

16. Dispositif selon la revendication 14 ou 15, dans laquelle la couche active (4 ; 4a, 4b) est fixée à la couche de base (6).

17. Procédé d'installation d'un élément transpondeur (1) sur un objet (2), **caractérisé par** les étapes suivantes:
mise en place de dispositifs comportant respectivement un élément transpondeur comprenant une couche support (3) supportant respectivement l'élément transpondeur (1) et couplée à au moins une couche active (4 ; 4a, 4b) par des connexions isolées (5a-5d), sachant que, pour accroître la distance entre l'élément transpondeur (1) et l'objet (2), la couche support est extensible et/ou la couche active (4) est rétractable, en continu sur une bande ;
pose des dispositifs sur l'objet (2) ;
accroissement de la distance entre l'élément transpondeur (1) et l'objet (2).

18. Procédé selon la revendication 17, dans lequel l'accroissement de la distance entre l'élément transpondeur (1) et l'objet (2) est faite par activation chimique et/ou physique ;

19. Procédé selon la revendication 18, dans lequel l'activation chimique et/ou physique entraîne une modification des dimensions de la couche support et/ou de la couche active (4 ; 4a, 4b).

20. Procédé selon la revendication 19, dans lequel la modification de dimensions comprend une rétraction de la couche active (1).

21. Procédé selon la revendication 19 ou 20, dans lequel la modification de dimensions comprend une expansion de la couche support (15).

22. Procédé selon une des revendications 19 à 21, dans lequel la modification de dimensions comprend un accroissement de l'épaisseur de la couche support (8) et/ou de la couche active par intumescence ou élasticité.

23. Procédé selon une des revendications 17 à 22, dans lequel la couche support (8) et/ou la couche active sont durcies.
